# EUROPÄISCHE PATENTSCHRIFT

(11) **EP 1 091 795 B1**
(45) Veröffentlichungstag und Bekanntmachung des Hinweises auf die Patenterteilung: **09.04.2003**
(21) Anmeldenummer: 99929300.4
(22) Anmeldetag: 22.06.1999
(51) Int. Cl.: B01D 46/52, B01D 29/07

(54) **FALTENFILTER**
FOLDED FILTER
FILTRE A PLIS

(30) Priorität: 30.06.1998 DE 19829100; 12.02.1999 DE 29902483 U
(43) Veröffentlichungstag der Anmeldung: 18.04.2001
(73) Patentinhaber: Köhler, Otmar, 63322 Rödermark (DE)
(72) Erfinder: Köhler, Otmar, 63322 Rödermark (DE)
(74) Vertreter: Zapfe, Hans, Dipl.-Ing.
(86) Internationale Anmeldenummer: EP9904321
(87) Internationale Veröffentlichungsnummer: WO00000269

(56) Entgegenhaltungen:
- EP-A- 0 691 152
- EP-A- 0 701 854
- WO-A-84/00014
- WO-A-88/01898
- DE-A- 2 029 680
- DE-A- 2 137 309
- GB-A- 1 148 942

## Beschreibung

Die Erfindung betrifft Faltenfilter nach den Oberbegriffen der Patentansprüche 1, 2 und 3.

Derartige Faltenfilter für die Abtrennung von Feststoffen aus fluiden Medien wie Flüssigkeiten und Gasen wie z.B. Luft, sind bekannt; sie ermöglichen die Unterbringung großer Filterflächen auf engstem Raum und damit die Ansammlung großer Feststoffmengen. Bei hohen Druckdifferenzen zwischen der Anström- und der Abströmseite, bedingt durch die Vliesstruktur und -form und die Filtergröße entsteht ein allmähliches Zusetzen der Filterflächen.

Dadurch ergeben sich Festigkeits- und Standzeitenprobleme, da die einzelnen Falten bei fehlender Abstützung innnerhalb der Filterflächen gewissermaßen als "Träger oder Flächen auf zwei Stützen" angesehen werden müssen und bei überlastung einknicken oder ausbeulen. Durch "Ausbeulen" berühren sich die benachbarten Falten, wodurch eine Teil der Filterfläche verloren geht. Eine oder mehrere Abstützungen innnerhalb der Filterflächen, z.B. durch Träger eines Rahmens oder durch Verklebungen mit "Hotmelts" sind jedoch häufig nicht erwünscht, weil bei derartigen Massenprodukten die Mehrkosten eine entscheidende Rolle spielen und außerdem Filterfläche verloren geht und/oder der Strömungswiderstand erhöht wird.

Durch die DE 39 16 838 A1 ist es bekannt, bei mehrlagigen Faltenfiltern aus Vliesen mit thermoplastischen Fasern zwischen den einzelnen Falten durch Wärmeeinfluß streifenförmige verdichtete Fügezonen auszubilden, die die Eigenschaft von Filmscharnieren haben, und innerhalb der Falten bzw. der Filterflächen quer zu den Fügezonen Wellen auszubilden, die sich im Betrieb an rechteckigen Berührungsflächen aufeinander abstützen und dadurch die Festigkeit des Faltenfilters erhöhen. Dabei wird der zusätzlich benötigte Werkstoff aus der zu prägenden Faltenwand durch den Prägevorgang herausgezogen, wodurch die Wandungen entsprechend dünner ausgebildet werden, was wiederum zu einer Schwächung und zu unterschiedlichen Durchlässigkeiten innerhalb der Filterflächen führt. Die Vergrößerung der Filterfläche ist jedoch begrenzt und geht durch die Abstützungen an den rechteckigen Berührungsflächen zum Teil wieder verloren, insbesondere dann, wenn an den Berührungsflächen eine Verschweißung erfolgt. Die Prägung durch Walzen oder Prägestempel muß vor dem Falten erfolgen. An den Faltkanten selbst erfolgt keine ausreichende Erhöhung der Festigkeit gegen ein Einbeulen. Die Erzeugung von Stegen und/oder eines verstärkten Randbereichs ist nicht beschrieben.

Durch die DE 21 12 360 A1 ist ein Papierfilter bekannt, bei dem - werkstoffbedingt - keine örtliche Plastifizierung möglich ist. Eine Erhöhung der Steifigkeit der einzelnen Filterflächen erfolgt auch hier durch eine wellenförmige Ausbildung dieser Filterflächen. Die Einhaltung von Abständen zwischen den Filterflächen erfolgt dadurch, daß an den Faltgelenken auf wenigstens einer Seite zwei parallel nebeneinander gelegte Knickkanten erzeugt werden. Die Erzeugung von Stegen und/oder eines verstärkten Randbereichs ist nicht beschrieben.

Durch die EP 0 522 692 A2 ist es bekannt, in Faltenfiltern aus Sandwich--Material mit Innenschichten aus Glasfasern und Außenschichten aus thermoplastischen Fasern durch Wärmeinwirkung Nähte zu erzeugen, durch die die Faltkanten versteift werden. Die Filterflächen selbst sind jedoch nicht versteift, und für ihre Vergrößerung sind keine Maßnahmen angegeben. Die Erzeugung von Stegen und/oder eines verstärkten Randbereichs ist nicht beschrieben.

Durch die WO 84/00014 sind Faltenfilter bekannt, bei denen durch eine besondere Art der Faltung Abstände zwischen den einzelnen Filterflächen eingehalten werden. Bezüglich der Art und Herstellung der Faltung ist nur angegeben, daß es sich um Rillungen, Kerbungen und Falzungen handelt, die durch bekannte Werzeuge wie Klingen oder Lineale hergestellt werden. Diese Werkzeuge können entweder einzeln oder paarweise eingesetzt werden. über die Art des Filtermaterials und die Einwirkungen der Werkzeuge auf die Faltlinien werden keine Angaben gemacht. Es ist davon auszugehen, daß die Werkzeuge kalt eingesetzt werden und daß keine Verdichtung durch Plastifizierung des Werkstoffs erfolgt. Auch über die Art und Herstellung von Vorsprüngen entlang der Faltkanten werden keine Angaben gemacht.

Durch die EP 0691 152 A1 ist es bekannt, auf die Anströmkanten von Faltenfiltern mehrfach gefaltete Pappstreifen aufzukleben, deren um 90 Grad abgewinkelte Enden mit einem Rahmen verklebt werden. Für die Abstandshalterung werden weitere, U-förmig gefaltete Pappstreifen verwendet, deren einer Schenkel kammartig ausgebildet und auf die Falten aufgeschoben ist. Die Herstellung ist aufwendig und bedingt in erheblichem Umfange Handarbeit. über eine linienförmige Verdichtung und Verfestigung des Filtermaterials durch Plastifizierung werden keine Angaben gemacht.

Durch die WO 88/01898 ist es bekannt, turmartige Filtereinsätze aus einzeln gepreßten und profilierten Scheiben aufzubauen, nicht aber aus gefaltetem Endlosmaterial oder gefalteten Zuschnitten.

Durch die DE 2 137 309 A1 ist es bekannt, zick-zack-förmig gefaltete und mit Kunstharz imprägnierte Papierstreifen in ihren Randbereichen zusammen zu pressen und durch Wärmeeinwirkung unter Schließung aller Poren zu verdichten. Die Wärmeeinwirkung erfolgt durch beheizte Werkzeuge, wobei Werkzeug-Temperaturen zwischen 100°C und 200°C und Preßdrücke zwischen 300 und 1000 Kilopond pro Quadratzentimeter angewandt werden sollen. Soweit im Faltblock Versteifungsrippen vorgesehen sind, sollen diese auf die gleiche Weise hergestellt werden wie die Randbereiche. Es ist aber nicht angegeben, wie und wo die Versteifungsrippen angeordnet sein sollen. Wegen der sehr hohen Preßdrücke sind bei ausgedehnten Randbreichen und Randlängen auf dem Umfang für die Herstellung sehr aufwendige Maschinen erforderlich. Für die Aufheizung werden 10 Sekunden und für die Abkühlung unter vollem Preßdruck werden 5 Minuten angegeben, wodurch die Produktivität sehr gering ist. Es ist aber außerdem extrem schwierig, in solch kurzen Zeiten die Temperatur der Preßwerkzeuge entsprechend zu variieren. Die Anwendung von Ultraschall für die Verdichtung und Plastifizierung ist nicht erwähnt.

Durch die EP 0 701 854 A1 ist es bekannt, zunächst ebenes ein- oder mehrlagiges Filtermaterial aus Faserstoffen wie Vliesen im Rastermaß mit noppen- oder linienförmigen Prägungen zu versehen, die nachfolgend durch Beschichtung und/oder thermische Behandlung versiegelt werden. Dadurch soll erreicht werden, daß Filterflächen, die durch nachträgliche Faltung oder Plissierung in unmittelbare Nachbarschaft zueinander geraten, durch Reibung unter Druck verschleißen. Das zu einem Hohlzylinder geformte gefaltete Filtermaterial stützt sich auf einem zylindrischen Lochblech ab. Derartige Filter sind aufwendig in der Herstellung, und durch die Versiegelung geht ein mehr oder weniger großer Anteil der wirksamen Filterfläche verloren, d.h. diese wird gegenüber dem Ursprungszustand verkleinert und nicht vergrößert. Dies gilt auch für eines der Ausführungsbeispiele, bei dem durch das Filtermaterial eine Vielzahl von Nieten aus Kunststoff hindurchgetrieben wird. Ein derartiger Herstellvorgang ist sogar noch aufwendiger.

Der Erfindung liegt demgegenüber die Aufgabe zugrunde, Faltenfilter nach den Oberbegriffen der Patentansprüche 1, 2 und 3 anzugeben, bei denen eine merkliche Erhöhung der Gestaltfestigkeit gegen Einknicken bei hohen Druckdifferenzen und eine Verlängerung der Standzeit erfolgt, ohne daß hierfür Fremdabstützungen benötigt werden und/oder eine Dickenverringerung durch Ausziehen erfolgt. Außerdem sollen bei derartigen Massenprodukten die Mehrkosten in Grenzen gehalten, keine Filterfläche durch Berührung oder gar Verschweißung zwischen den Falten bzw. Filterflächen verloren gehen und/oder es soll der Strömungswiderstand auch über lange Zeiten so gering wie möglich gehalten werden.

Die Lösung der gestellten Aufgabe erfolgt bei einem Faltenfilter nach dem Oberbegriff des Patentanspruchs 1 durch die Merkmale im Kennzeichen des Patentanspruchs 1, bei einem Faltenfilter nach dem Oberbegriff des Patentanspruchs 2 durch die Merkmale im Kennzeichen des Patentanspruchs 2 und bei einem Faltenfilter nach dem Oberbegriff des Patentanspruchs 3 durch die Merkmale im Kennzeichen des Patentanspruchs 3.

Unter dem Begriff "Energieeintrag" wird die Anwendung aller Fügeverfahren verstanden, bei denen Wärme und/oder Druck ohne und mit Zusatzwerkstoff auf das Fasermaterial und/oder seine Komponenten einwirkt, wie Ultraschall, Thermoprägung, Laserstrahlung, Schweißung, insbesondere Schweißung nach DIN 1910 und Fügeverfahren nach DIN 8593.

Es handelt sich bei dem Gegenstand des Anspruchs 1 um röhrenförmige Versteifungen der Filterflächen selbst, d.h., um Versteifungen, die die wirksame Filterfläche vergrößern und sich quer zum Verlauf der Röhren auch mindestens an den Faltlinien überlappen und in den überlappungsbereichen durch linienförmige Plastifizierung auch irreversibel miteinander verbunden sind. Bei dem Gegenstand des Anspruchs 1 liegt nicht nur kein Ausziehen bzw. keine Reckung des Fasermaterials vor, sondern bei gleichbleibender Festigkeit sogar eine Vergrößerung der wirksamen Filterflächen.

Es handelt sich bei dem Gegenstand des Anspruchs 2 um eine verfestigte und weitgehend porenfreie und plastifizierte Struktur nach Art von in das Faltenfilter integrierten Leisten oder Stegen dünnen Querschnitts, die im Gesamtfilter eine Art Film- oder Folienscharniere und/oder eine Art Linienoder Kreuzraster in einem Rastermaß mit erhöhter Festigkeit bilden. Hierfür können an sich übliche Verfestigungsverfahren wie Schweißung, Thermoprägung durch Heizlineale, Laserbeheizung und Ultraschaiteinwirkung angewendet werden. Die plastifizierten Faltkanten ermöglichen eine problemlose Weiterverarbeitung auch dann, wenn das Vormaterial in Rollenform angeliefert wird. Bei dem Gegenstand des Patentanspruchs 2 liegt eine erhebliche Versteifung des Fasermaterials an den Faltkanten vor.

Es handelt sich bei dem Gegenstand des Anspruchs 3 um ein Faltenfilter, bei dem die Auffaltungen in einem versteiften Randbereich fixiert sind, wobei sich die Festigkeitssteigerung auch auf den gefalteten Bereich zwischen den Randbereichen überträgt.

Im Prinzip geht es um vier verschiedene Verfestigungsanordnungen, die durch Weiterbildungen auch miteinander kombinierbar sind:
1. quer zur Faltenreihe, z.B. durch stabilisierende Auffaltungen, Wellen und/oder Röhren, die sich überlappen und in den Faltlinien fixiert sind, und
2. längs der Faltenreihe, z.B. durch Stege oder Leisten, die parallel zu oder zusammenfallend mit den Faltlinien angeordnet sind,
3. die Verfestigung des Randbereichs, und
4. Kombinationen mindestens zweier Merkmale unter 1. bis 3.

Durch diese Konstruktionsmerkmale wird die gestellte Aufgabe in vollem Umfange gelöst. Insbesondere werden auch ohne zusätzliche Abstützungen, d.h. Fremdabstützungen, im Flächenbereich der Filterflächen hohe Druckdifferenzen zwischen der Anström- und der Abströmseite ermöglicht, so daß der Filter auch bei starker Belastung nicht vorzeitig einknickt oder übermäßig ausbeult. Außerdem werden bei derartigen Massenprodukten die Mehrkosten in Grenzen gehalten, und es geht keine Filterfläche verloren. Der Strömungswiderstand wird so gering wie möglich gehalten, und die Standzeit wird deutlich verlängert.

Es geht im Rahmen der Erfindung weiterhin darum, daß aus solchen Filterelementen ein Produkt erzeugt wird, bei dem auch die Stabilität und Versteifung des Randbereichs deutlich erhöht ist. Durch dienachstehend beschriebenen Weiterbildungen wird auch das Problem gelöst, aus den bereits beschriebenen Filterelementen ein Produkt zu erzeugen, dessen Stabilität auch im Randbereich deutlich erhöht ist. Dies geschieht u.a. über linien- und/oder flächenartige Plastifizierungen an den umlaufenden oder einseitigen Randbereichen, was nachstehend noch näher erläutert wird. Unter anderem hierdurch entsteht ein maßlich genaues und anwendungsspezifisches Produkt, dessen Herstellung kostensparend in der gleichen Produktionslinie erfolgen kann und das auch umweltverträglich entsorgt werden kann.

Im Prinzip geht es im Randbereich um verschiedene Verfestigungsmethoden, die auch miteinander kombinierbar sind, nämlich um umlaufenden Rahmungen. z.B. durch Umlegen der Ränder und/oder Falten an der Außenseite, die im Randbereich verschweißt sind.

Durch diese Konstruktionsmerkmale wird auch die zusätzliche Aufgabe in vollem Umfange gelöst: Die aus dem Filterelement erzeugte, sortenreine Filtereinheit ist zur direkten Integration in ein Filtergehäuse geeignet. Mittels der verfestigten Formgebung ist ein fester und dichter Einbau gegeben. Die Plastifizierungen versteifen die gesamte Filtereinheit und erzeugen eine genaue Positionierbarkeit, so daß auch einfache Nachbearbeitungen möglich sind.

Vorteilhafte Ausgestaltungen der Gegenstände nach den Ansprüchen 1, 2 und 3 sind in den Unteransprüchen enthalten.

Ausführungsbeispiele des Erfindungsgegenstandes und zusätzliche Vorteile werden nachfolgend anhand der Figuren 1 bis 37 näher erläutert:

Es zeigen:
- Figur 1: eine Draufsicht auf einen flachliegenden Filterabschnitt mit wellen- bzw. röhrenförmigen Auffaltungen zwischen und quer zu den Fügezonen,
- Figuren 2 bis 5: Querschnitte durch verschiedene Faltungsformen in stark vergrößertem Maßstab.
- Figur 6: einen Querschnitt durch einen gefalteten Filterabschnitt mit quer zu den Faltlinien verlaufender Wellen- bzw. Röhrenstruktur,
- Figur 7: den Auschnitt im Kreis VII in Figur 6 in vergrößertem Maßstab.
- Figur 8: die Auschnitte im Kreis VIII in Figur 6 in vergrößertem Maßstab.
- Figur 9: eine Variante des Gegenstandes nach Figur 1,
- Figur 10: eine weitere Variante des Gegenstandes nach Figur 1,
- Figur 11: eine Variante des Gegenstandes nach Figur 1 mit beiderseits der Filterflächen abstehenden Stegen bzw. Leisten,
- Figur 12: den oberen Teil einer Variante des Gegenstandes nach Figur 11, bei der die Stege bzw. Leisten auf der Anströmseite durch entgegengesetzte Faltung zwischen die Filterflächen gelegt sind,
- Figuren 13 und 14: eine Variante des Gegenstandes nach Figur 11 mit auf der Anströmseite abstehenden Stegen bzw. Leisten, die durch Doppelfaltungen gebildet sind, in vergrößertem Maßstab.
- Figur 15: eine perspektivische Ansicht eines mehrfach dachförmig gefalteten Faltenfilters mit einer umlaufenden Randverstärkung,
- Figur 16: eine stirnseitige Ansicht eines mehrfach dachförmig gefalteten Faltenfilters vor der Ausbildung einer umlaufenden Randverstärkung,
- Figur 17: eine Seitenansicht des Gegenstandes von Figur 16 in Richtung des Pfeils XVII in Figur 16.
- Figur 18: eine stirnseitige Ansicht eines mehrfach dachförmig gefalteten Faltenfilters nach dem Komprimieren des Randbereichs,
- Figur 19: eine Seitenansicht des Gegenstandes von Figur 18 in Richtung des Pfeils XIX in Figur 18.
- Figur 20: eine stirnseitige Ansicht eines mehrfach dachförmig gefalteten Faltenfilters nach der Ausbildung einer umlaufenden Randverstärkung,
- Figur 21: eine Seitenansicht des Gegenstandes von Figur 20 in Richtung des Pfeils XXI in Figur 20,
- Figur 22: eine stirnseitige Ansicht eines mehrfach dachförmig gefalteten Faltenilters nach der Ausbildung einer umlaufenden Randverstärkung analog Figur 20, jedoch mit einer Plastifizierung der stirnseitigen Enden der Faltungen,
- Figur 23: eine Seitenansicht des Gegenstandes von Figur 22 in Richtung des Pfeils XXIII in Figur 22,
- Figur 24: den Gegenstand von Figur 23, jedoch mit einem auf den Randbereich aufgetragenen Zusatzwerkstoff,
- Figur 25: eine Variante des Gegenstandes nach Figur 24 mit einer Befestigung des Randbereichs zwischen zwei Rahmenteilen oder Flanschen,
- Figur 26: die Verbindung von zwei benachbarten Faltenfiltern durch eine Verbindungsschiene,
- Figur 27: einen Faltenfilter mit einem seitlichen Anschlußstück, ausgebildet für den Einsatz in einen Staubsauger,
- Figur 28: einen Faltenfilter mit einem stirnseitigen Anschlußstück, ausgebildet für den Einsatz in einen Staubsauger,
- Figur 29: eine perspektivische Ansicht eines im wesentlichen flachliegenden Faltenfilters mit röhrenförmigen Faltungen und einer umlaufenden Randverstärkung,
- Figur 30: eine stirnseitige Ansicht eines Mehrfach-Faltenfilters, ausgebildet als Taschenfilter,
- Figur 31: eine Seitenansicht des Taschenfilters nach Figur 30 in Richtung des Pfeils XXXI in Figur 30 in verkleinertem Maßstab,
- Figur 32: eine wiederum weitere Variante des Gegenstandes nach Figur 1,
- Figur 33: eine stirnseitige Ansicht einer Variante des Gegenstandes nach Figur 15,
- Figur 34: eine Draufsicht auf den Gegenstand nach Figur 33,
- Figuren 35 und 36: Kombinationen eines Faltenfilters nach Figur 15, u.a. mit Filtermaterial, das mindestens teilweise aus Aktivkohle besteht, und
- Figur 37: eine Draufsicht eines im wesentlichen flachliegenden Faltenfilters analog Figur 29 mit Auffattungen und einer umlaufenden Randverstärkung.

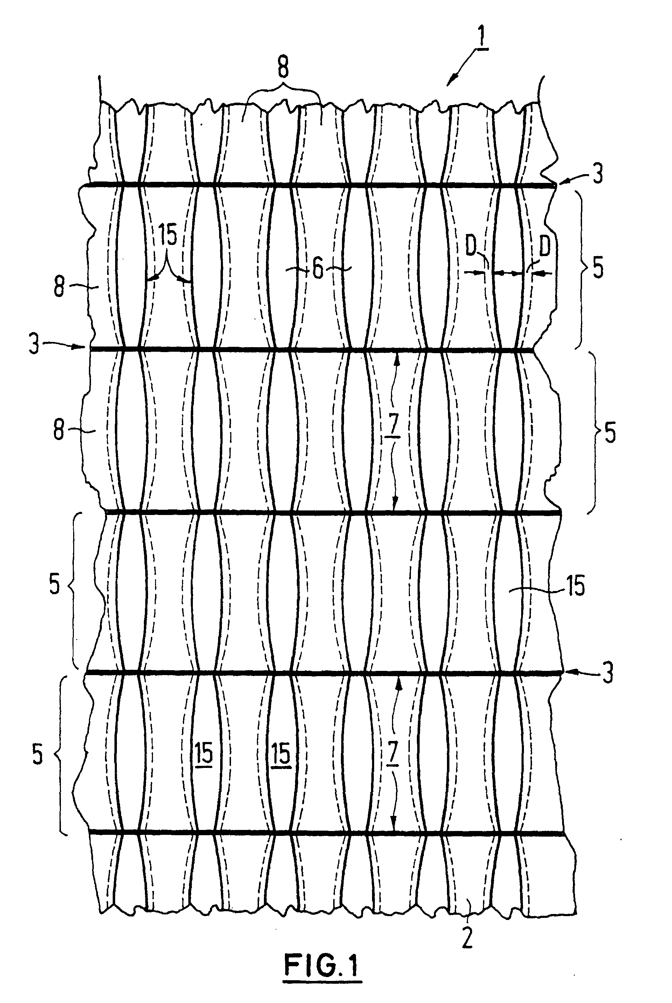

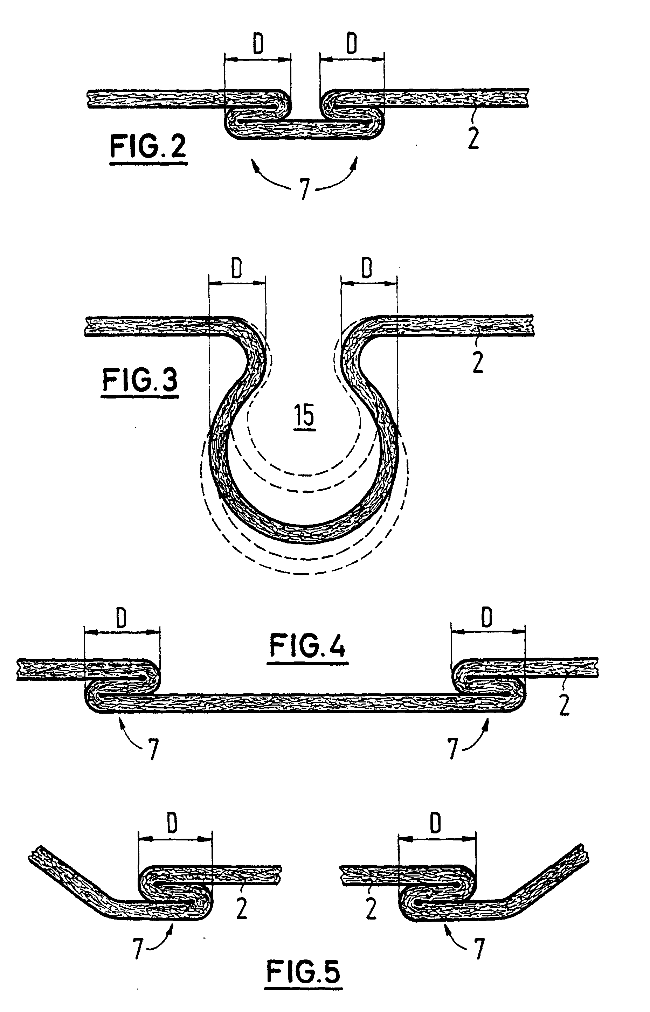

Figur 1 zeigt eine Draufsicht auf die Anströmseite eines flachliegenden Filterabschnitts aus einer Werkstoffbahn 2 mit fünf Faltlinien 3, zwischen denen Filterflächen 5 mit Auffaltungen 6 und 8 angeordnet sind, die rechtwinklig zu den Faltlinien 3 verlaufen. Diese Auffaltungen bilden Röhren 15, deren mögliche Querschnitte anhand von Figur 3 noch näher erläutert werden. Gezeigt ist die Fixierung dieses Zustandes entlang den Faltlinien 3 durch streifenförmige Fügezonen 7 mit begrenzter Breite, die mit den Faltlinien 3 zusammenfallen bzw. diese bilden, und durch die das Fasermaterial an den Kreuzungspunkten der Auffaltungen 6 und 8 mit den Fügezonen 7 gegenüber der ursprünglichen Dicke plastifiziert, verdichtet, verschweißt und verbunden ist. Durch gestrichelte Linien,sind überlappungsbereiche "D" angedeutet, die anhand der Figuren 2 bis 5 noch näher erläutert werden.

Gemäß Figur 1 haben die von den alternierenden Auffaltungen 6 und 8 gebildeten Röhren 15 in der gezeigten Draufsicht ein tonnenförmiges Aussehen mit gleichen Breiten im Bereich der Fügezonen 7. Dabei kann es auch vorteilhaft sein, unterschiedliche Breiten von Wellenbergen und Wellentälern vorzusehen. In den Kreuzungsbereichen sind die Wellentäler und die Wellenberge praktisch in eine Ebene, die sogenannte "Faltebene", mit den Faltlinien 3 bzw. Faltkanten 4 gezwungen, und die Auffaltungen sind hierdurch fixiert, was in den Figuren 2 und 4 angedeutet ist. In diesem Fall befinden sich die Endpunkte der Röhren 15 in den Fügezonen 7 an den Ecken eines imaginären Rechtecks.

In Figur 3 ist eine solche Röhre 15 in ausgezogenen Linien dargestellt. Je nach der Menge des beim Faltvorgang zur Verfügung gestellten Materials kann diese Röhre 15 unterschiedliche Durchmesser aufweisen, und dieser Durchmesser kann auch über die Länge jeder einzelnen Röhre 15 unterschiedlich sein, was durch gestrichelte Linien angedeutet ist. Entscheidend ist, daß der Umfang der Röhre 15 sich über mehr als 180°, beispielhaft über etwa 270°, erstreckt, wodurch überlappungsbereiche "D" gebildet werden, die für den Fügevorgang von Bedeutung sind.

Durch symmetrisches Zusammenpressen der Röhren 15 in den Fügezonen 7 entstehen in einem Zwischenstadium je nach der Materialführung beim Falten Gebilde nach den Figuren 2 oder 4, beim asymmetrischen Zusammenpressen solche nach Figur 5. Durch weitere Druckerhöhung und/oder Wärmeinwirkung verschmilzt das Material in den überlappungsbereichen "D" der Fügezonen 7, was hier nicht mehr besonders dargestellt ist. Die Gesamtdicke der drei Lagen wird dadurch deutlich geringer, wodurch auch die Faltbarkeit verbessert wird.

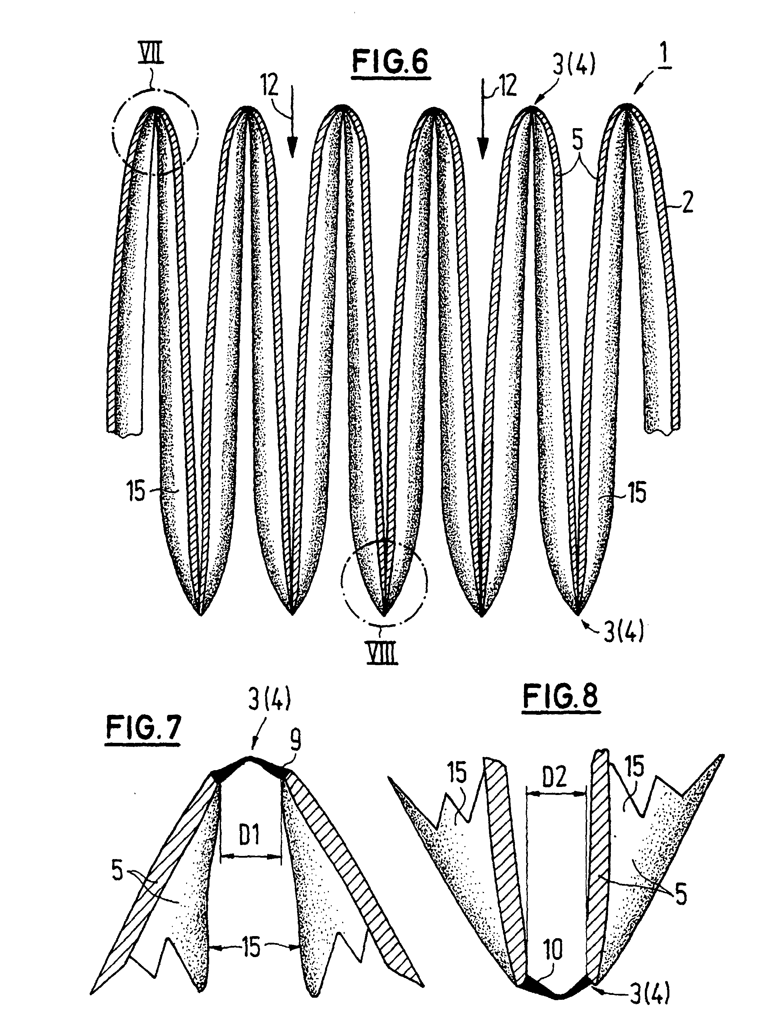

In den Figuren 6 bis 8 ist ein Faltenfilter 1 mit einer Werkstoffbahn 2 aus einem Vlies bzw. Fasermaterial aus thermoplastischen Fasern mit Faltlinien 3 bzw. Faltkanten 4 dargestellt, die in diesem Falle zusammenfallen und zwischen sich die welligen bzw. mit Röhren 15 versehene Filterflächen 5 einschließen. Diese Röhren 15, die durch Punktschattierung plastisch hervorgehoben sind, sind bei diesem Ausführungsbeipiel für die Stabilität der Filterflächen 5 von besonderer Bedeutung; sie umschließen gemäß Figur 3 einen Röhrenquerschnitt um mehr als 180° und werden durch Faltung bzw. Wellung durch Zusammenziehen der Breite der Werkstoffbahn 2 hergestellt und nicht durch Recken und "Verdünnen" des Fasermaterials. Der Umfang von mehr als 180° schafft auch die Voraussetzung für die Bildung der weiter oben anhand der Figuren 1 bis 5 näher beschriebenen überlappungsbereiche "D".

Das Fasermaterial ist im Bereich der Fügezonen 7 auf beiden Langseiten der Filterflächen 5, also senkrecht zur Zeichenebene, durch einen Vorgang aus der Gruppe Kompression, Fügung (thermische Schweißung oder Schweißung durch Ultraschall) und Prägung gegenüber dem Ursprungszustand plastifiziert und dadurch zu einer Art Filmscharnieren verdichtet und verfestigt, was durch die schwarzen Verdichtungsbereiche 9 und 10 in den Figuren 7 und 8 angedeutet ist. Die Maße D1 und D2 liegen zwischen 0,2 und 20 mm. Hierdurch und durch die Querfaltungen zu den Wellen oder Röhren 15 ist die Faltbarkeit nicht beeinträchtigt, sehr wohl aber ist die Gestaltfestigkeit erhöht. Dadurch werden die Röhren 15 praktisch in einer Ebene zusammengequetscht und untrennbar miteinander verbunden, so daß die Röhren auch unter dem Betriebsdruck nicht mehr aufgehen können.

Wie aus den vorausgegangenen Figuren hervorgeht, werden durch die Auffaltungen 6 und 8 eine Art einseitig (zur Anströmseite hin) offener Röhren 15 gebildet, die für unterschiedliche Filter unterschiedliche Querschnitte und Abstände haben können. Die Strömungsrichtung ist durch Pfeile 12 angedeutet. In jedem Fall wird durch eine solche Filterform nicht nur die Steifigkeit gegenüber Verformungen durch Druckdifferenzen, sondern auch die Filterfläche und damit die Standzeit deutlich erhöht.

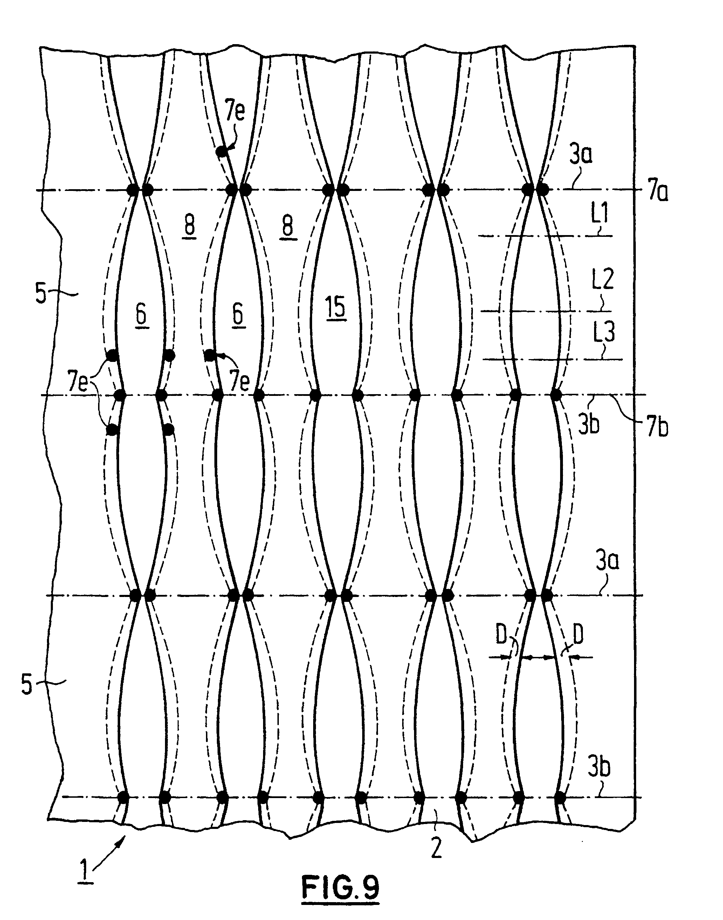

Anhand der Figur 9 ist dargestellt daß die Fügezonen 7a bzw. 7b nicht durchgehend ausgebildet sein müssen, sondern auch unterbrochen bzw. punktförmig ausgebildet sein können. In diesem Fall befinden sich die Fügezonen 7a und 7b an den Ecken eines imaginären Parallelogramms, so daß die Röhren 15 angenähert die Form bauchiger Flaschen haben. Damit ist folgender zusätzlicher Vorteil verbunden: Die Faltlinien 3b bilden später die der Anströmseite zugekehrten "Dachfirste" des fertigen Faltenfilters. An den entgegengesetzten Enden (im Bereich der Faltlinien 3a, d.h. auf der Abströmseite) haben die Röhren 15 einen kleineren Querschnitt, bzw. eine weiter in den Freiraum ausladenden Raumform. Dadurch wird die Gefahr einer gegenseitigen Berührung der Röhren, die in gefaltetem Zustand keilförmig zueinander verlaufen, weiter vermindert (siehe auch Figur 6). Die unterschiedlichen Querschnitte der Röhren 15 im Bereich der Linien L1, L2 und L3 sind in Figur 3 angedeutet. Es können auch weitere Fügezonen 7e vorhanden sein, die - je nach den Bedürfnissen - eine Zwischenstabilisierung mit besonderer Formgebung zur Verbesserung der Strömungsverhältnisse erzeugen. Prinzipiell können diese zusätzlichen Verfestigungen bei allen beschriebenen Auffaltung 6 und 8 angebracht sein.

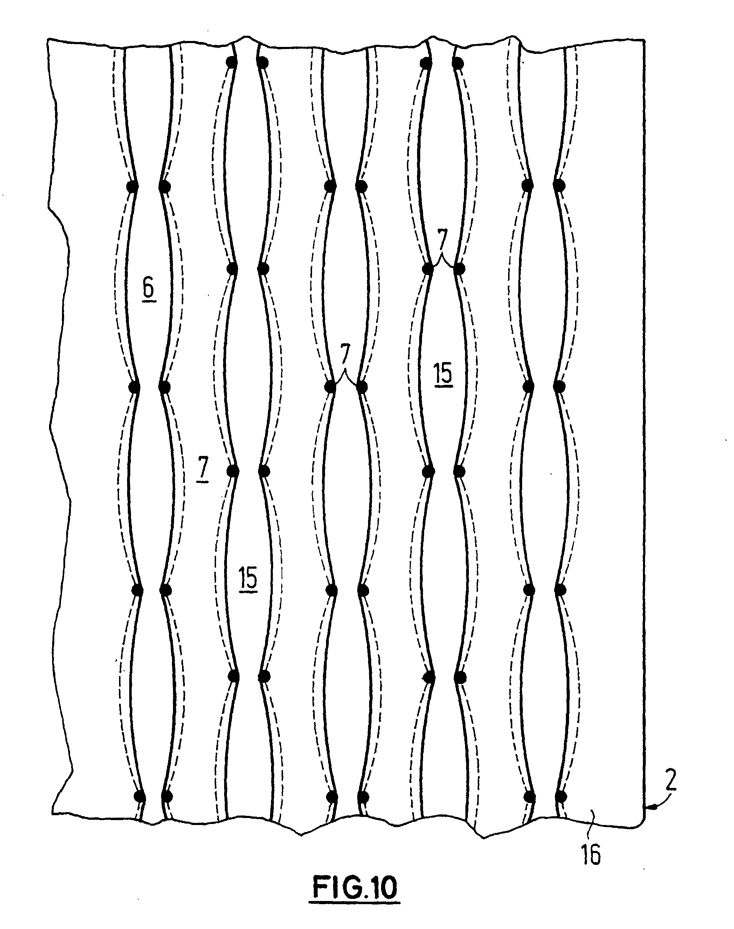

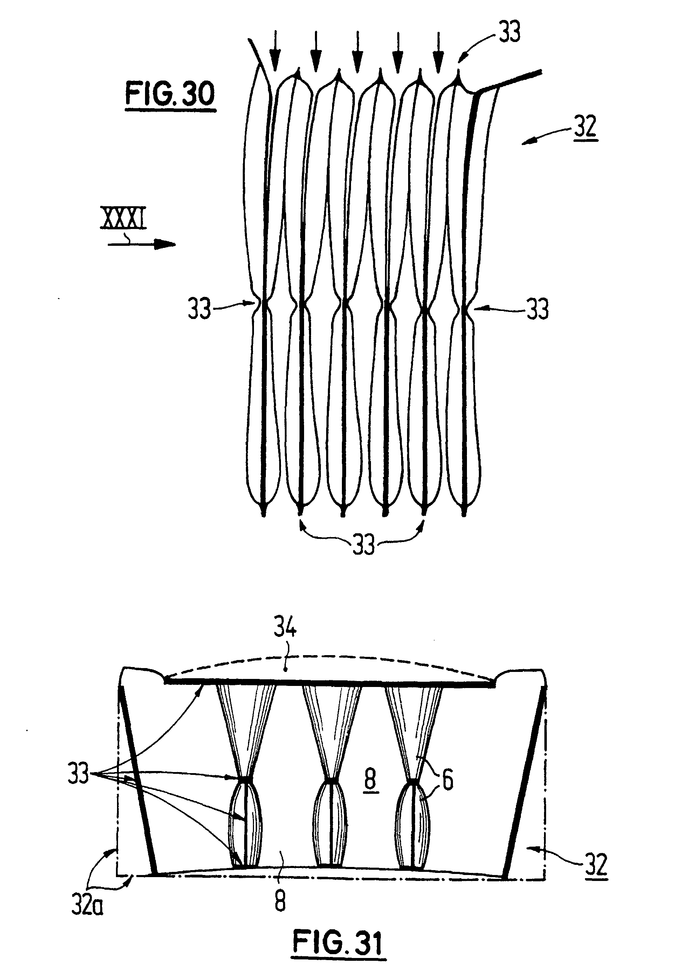

In Figur 10 ist dargestellt, daß die als schwarze Punkte dargestellten Fügezonen 7 benachbarter Röhren 15 um den halben Längenabstand dieser Fügezonen zueinander versetzt angeordnet sein können. Diese Ausführungsform eignet sich besonders gut für ein einfaches Faltenfilter, bei dem eine Hauptfläche 16 in ebenem Zustand verbleibt. Ein solches analoges Faltenfilter ist beispielhaft in Figur 29 dargestellt.

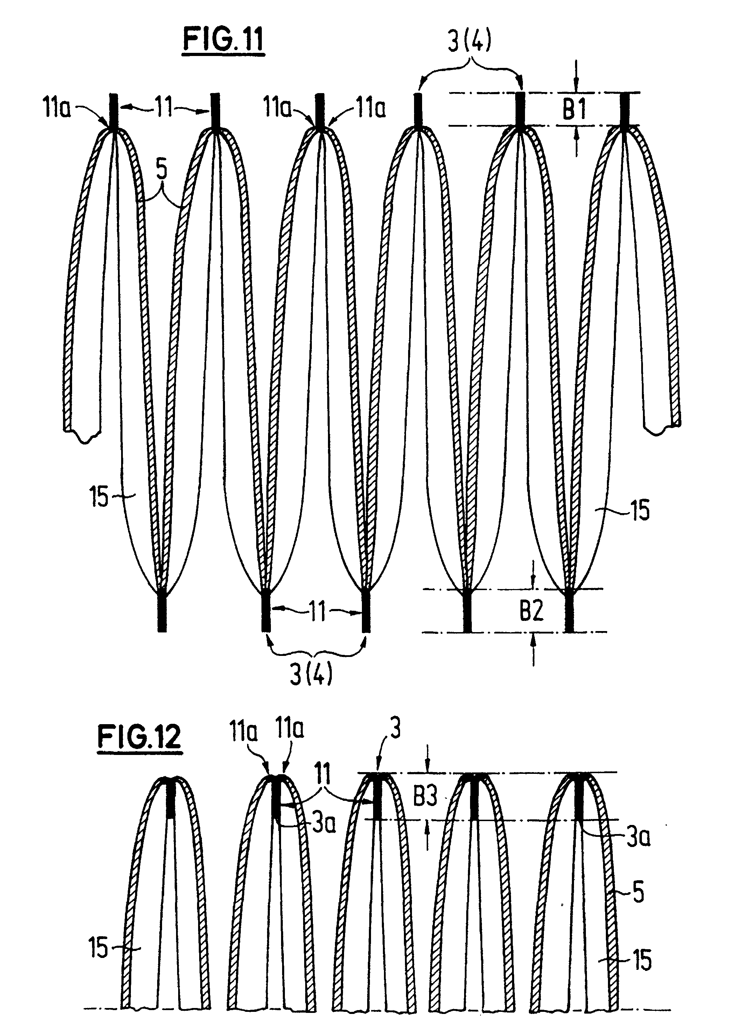

Die Figur 11 zeigt eine Variante des Gegenstandes nach Figur 6 in der Weise, daß die Filterflächen 5 zur An- und Abströmseite hin mit abstehenden Stegen bzw. Leisten 11 versehen sind, die sich - von den Faltlinien 3 bzw. Faltkanten 4 ausgehend - um die Maße der Bereiche B1 und B2 nach innen zu den Filterflächen 5 hin erstrecken und an den übergangsstellen zu paarweise vorhandenen Filmscharnieren 11a plastifiziert, verdichtet und in diesen Bereichen B1 und B2 durch Schweißen fest verbunden sind, was auch hier durch schwarze Flächen angedeutet ist. Diese Stege 11 bilden integrierte Versteifungselemente mit hohem Widerstandsmoment gegen Biegen und Einbeulen. Die Maße der Bereiche B1 und B2 können gleich sein, müssen dies aber nicht.

Die Figur 12 zeigt eine weitere Variante des Gegenstandes nach Figur 11, bei der die Stege bzw. Leisten 11 auf der Anströmseite (oben) durch entgegengesetzte Faltungen, insbesondere die Faltlinie 3a, zwischen die Filterflächen 5 gelegt sind. Auch hierbei ist das Fasermaterial bzw. Vlies in den Bereichen B3, verdichtet und verbunden, was auch hier durch schwarze Flächen angedeutet ist. Die jeweils paarweise gebildeten Filmscharniere 11a sind in den Figuren 11 und 12 besonders hervorgehoben.

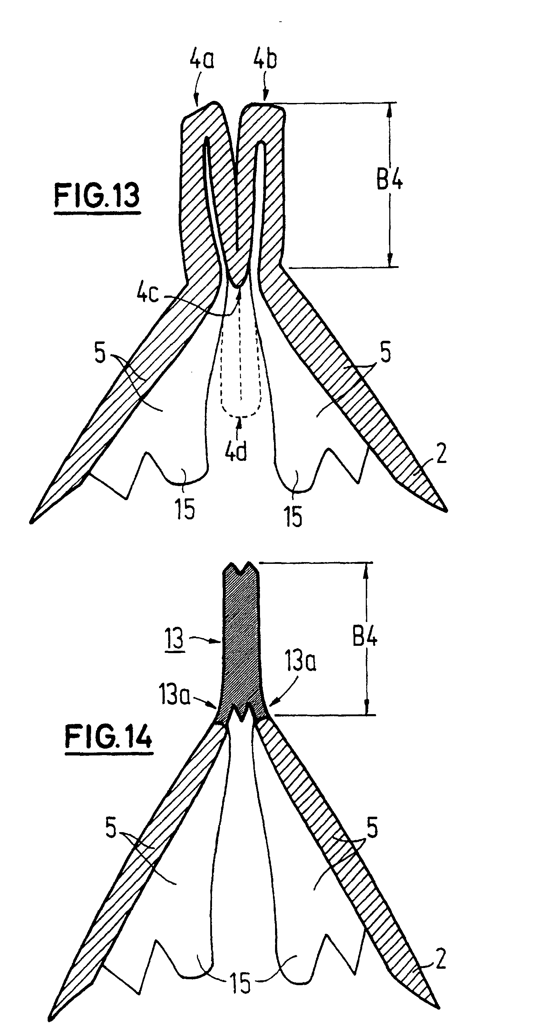

Die Figuren 13 und 14 zeigen eine weitere Variante des Gegenstandes nach den Figuren 11 und 12 mit beiderseits der Filterflächen 5 zur Anströmseite abstehenden Stegen bzw. Leisten 13, wobei diese durch Doppelfaltungen gebildet sind. Die Doppelfaltungen besitzen drei Faltkanten 4a, 4b und 4c, und zwar derart, daß jeweils vier Lagen der Werkstoffbahn 2 aufeinanderliegen und in einem Bereich B4 verdichtet und durch Schweißen miteinander verbunden sind, wobei gleichzeitig die beiden Filmscharniere 13a gebildet werden. Hierdurch wird die Gestaltfestigkeit noch weiter erhöht. Auch hierbei ist das Fasermaterial bzw. Vlies im Bereich B4 plastifiziert, verdichtet und verbunden, was auch hier durch eine schwarze Fläche angedeutet ist.

Die Maße B1, B2, B3 und B4 können zwischen 1 und 30 mm liegen. Figur 13 zeigt den Vorgang unmittelbar nach dem Falten, Figur 14 nach dem Plastifizieren. Die Faltkante 4a kann auch tiefer zwischen die Filterfläche 5 gelegt sein, was in Figur 13 durch die gestrichelte Line 4d angedeutet ist.

Vorzugsweise sind dabei die Doppel- oder Mehrfachfaltungen mindestens auf der Anströmseite angeordnet, weil hier höhere Kräfte herrschen und die Doppelfaltungen auf Druck und Ausbeulen beansprucht werden. Die Stege auf der Anströmseite dienen gewissermaß als Aufhängungen für die Filterflächen, während auf der Abströmseite nur Zugspannungen auftreten, so daß dort auch trotz schlankerer (oder keiner) Versteifungen ein ausreichender Widerstand gegen ein unzulässiges Verformen vorhanden ist.

Bei den Ausführungformen nach den Figuren 11 bis 14 müssen die Röhren 15 nicht notwendigerweise vorhanden sein, sie erhöhen aber - insbesondere bei großen Filterflächen 5 bzw. bei großen Abständen zwischen den Faltlinien 3 und 3a bzw. Faltkanten 4 und 4a zusätzlich die Steifigkeit der Filterflächen. Auch sind die überlappungsbereiche "D" nach den Figuren 1, 2 und 4 bei diesen Ausführungsbeispielen nicht zwingend erforderlich.

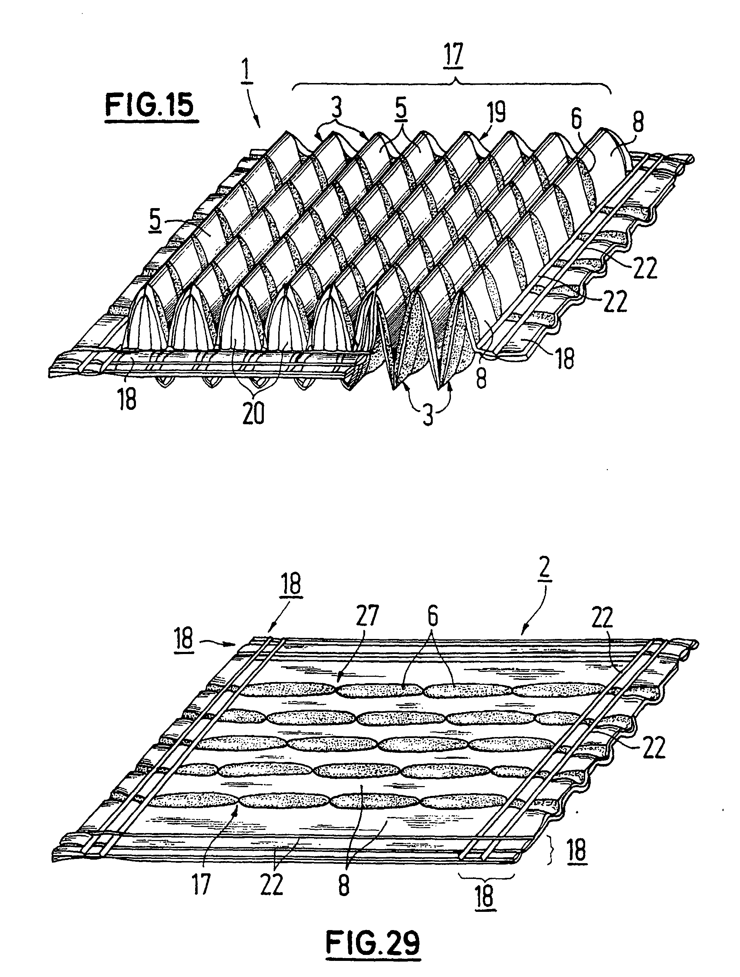

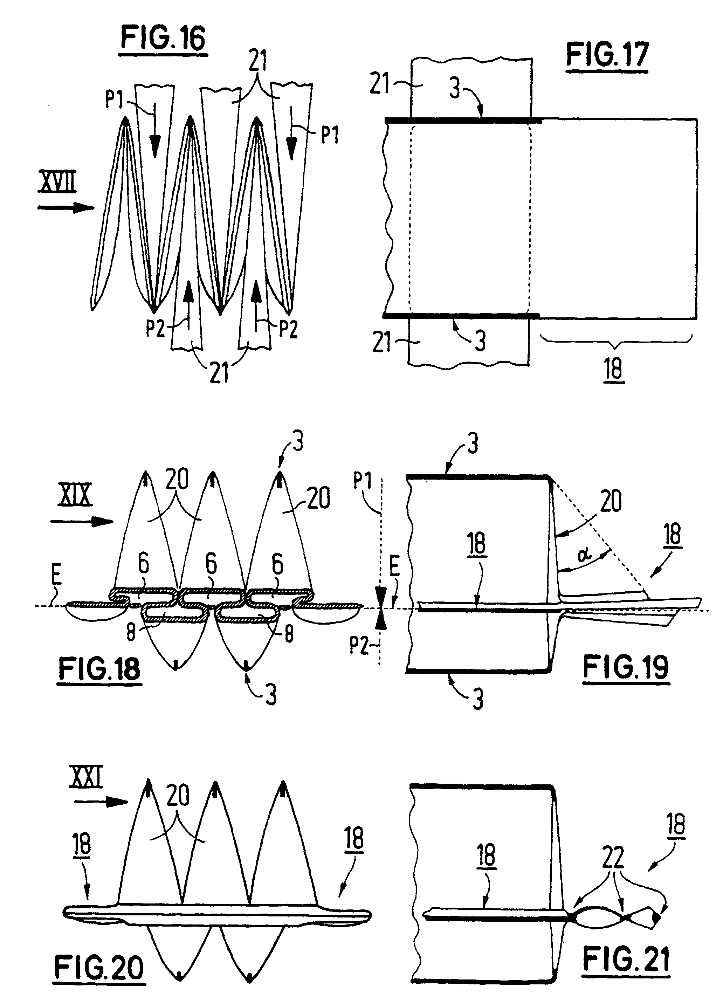

In Figur 15 sind zick-zack-förmige Faltungen 17 mit Faltlinien 3 in Form von spitzwinkligen Dächern gezeigt, die an ihren Enden durch giebelförmige Verschlußwände 19 und 20 abgeschlossen sind. In jeder der Dachflächen befinden sich in diesem Falle die bereits beschriebenen Auffaltungen 6 und 8 bzw. die hierdurch gebildeten Röhren, die in "Gefällerichtung" verlaufen. Die Anordnung ist von einem umlaufenden Randbereich 18 mit randparallelen, plastifizierten Fügelinien 22 umgeben, und die Herstellung wird anhand der Figuren 16 bis 23 noch näher erläutert.

Gemäß den Figuren 16 und 17 befinden sich zwischen den Faltungen 17 werkzeugseitige obere und untere Stützlineale 21 über die der spätere Randbereich 18 übersteht. Gemäß den Figuren 18 und 19 wird das Gebilde im Randbereich 18 durch Werkzeuge verdichtet, die in Richtung der Pfeile P1 und P2 relativ zueinander bewegt werden und durch die der ausgeprägte Randbereich 18 entsteht. Die Werkstoffbahn wird dabei im wesentlichen in einer Ebene E verdichtet, die an eine beliebigen Stelle zwischen den Faltlinien 3 gelegt werden kann. Figur 18 zeigt sehr deutlich die dabei entstehende oder verstärkte partielle überlappung der Auffaltungen 6 und 8, wie diese in Figur 2 gezeigt sind. Gemäß Figur 19 kann die gebildete Verschlußwand 20 je nach Form und Lage des Verdichtungswerkzeugs unterschiedlich Anstellwinkel aufweisen, die innerhalb eines Bereiches schwanken können, der durch den Winkel "α" angedeutet ist.

Gemäß den Figuren 20 und 21 werden nun durch nicht gezeigte Fügelineale die randparallelen, plastifizierten Fügelinien 22 erzeugt, die nicht nur eine geometrische Fixierung des Gebildes, sondern auch eine erhebliche Vertärkung des Randbereichs 18 herbeiführen.

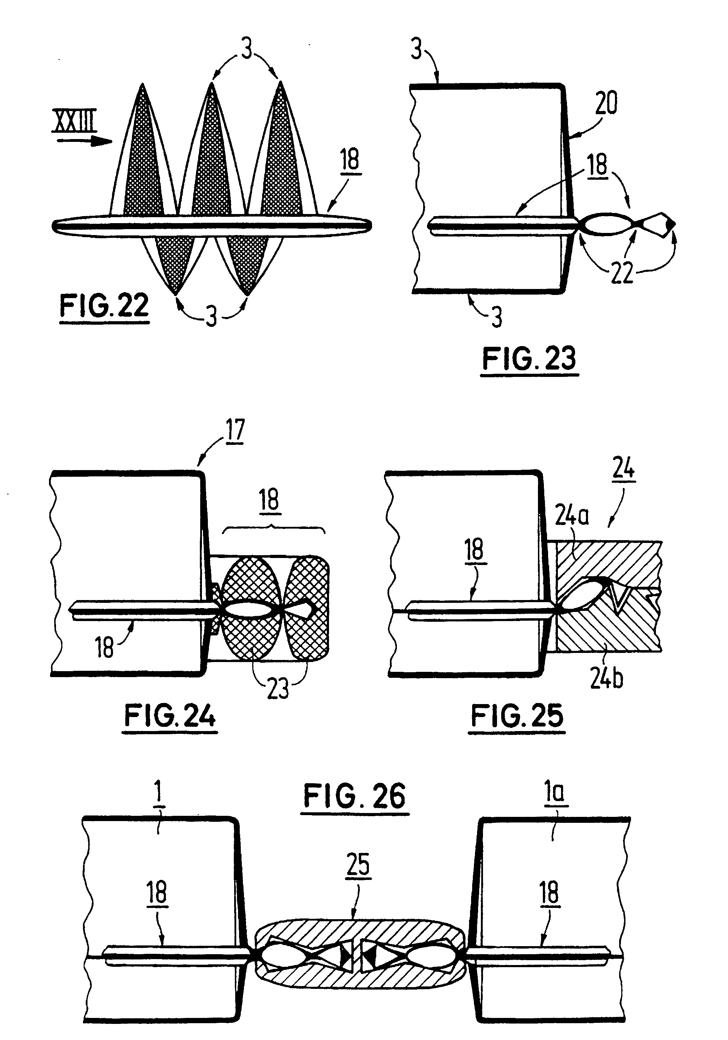

Die Figuren 22 und 23 zeigen ein fertiges Faltenfilter analog den Figuren 20 und 21, jedoch mit einer zumindest teilweisen Plastifizierung der Verschlußwand 20 an den stirnseitigen Enden der Faltungen, wodurch wenig Filterfläche verloren geht, aber die Formsteifigkeit zusätzlich erhöht wird. Die plastifizierten Bereiche sind durch schwarze Flächen kenntlich gemacht.

In Figur 24 ist auf den Randbereich 18 umlaufend ein Zusatzwerkstoff 23 aufgetragen, der ein thermoplastisches Elastomer, beispielsweise Polyurethan oder auch ein vorgefertigter Rahmen, sein kann. Diese Ausbildung kann als Dichtflansch, beispielsweise zum Einlegen in eine Flanschverbindung eines nicht gezeigten Filtergehäuses verwendet werden.

Bei der Ausführungsvariante nach Figur 25 erfolgt die Befestigung eines Randbereiches analog den Figuren 21 und 23 formschlüssig in einem geteilten Rahmen 24, der aus zwei Rahmenteilen 24a und 24b (oder Flanschen eines im übrigen nicht gezeigten Filtergehäuses) bestehen kann.

Figur 26 zeigt die Verbindung von zwei benachbarten Faltenfiltern 1 und 1a durch eine Verbindungsschiene 25, in die die Randbereiche 18 der beiden Faltenfilter 1 und 1a von den Enden her formschlüssig eingeschoben sind. Auf diese Weise läßt sich aus mehreren Einzelfiltern ein großflächiger Gesamtfilter zusammensetzen.

Die Verschlußwände 19 und 20 dienen als Filterflächen. Auch die Randbereiche 18 können mindestens teilweise noch als Filterflächen benutzt werden, dann nämlich, wenn bei einer Freilassung der Randbereiche 18 in einem aufnehmenden, nicht dargestellten, Gehäuse diese Randbereiche 18 noch teilweise durchlässig sind.

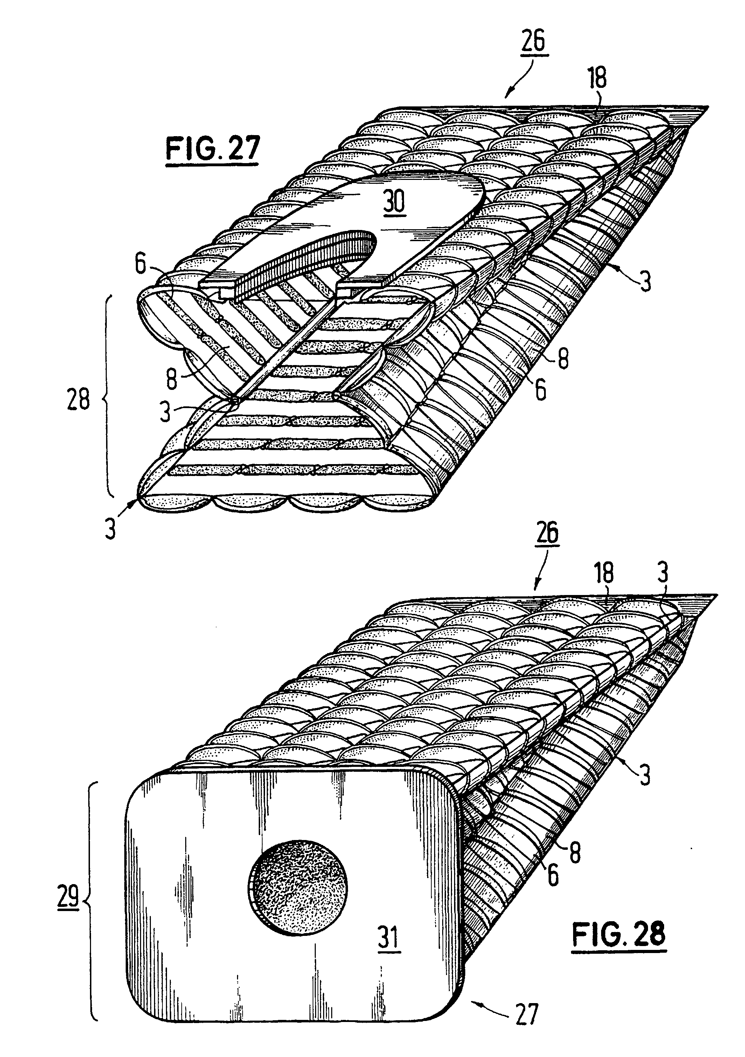

Die Figur 27 zeigt - teilweise geschnitten und perspektivisch einen Faltenfilter mit einem seitlichen Anschlußstück 30, ausgebildet als Filterbeutel 28 für den Einsatz in einen nicht gezeigten Staubsauger. Die Figur 28 zeigt perspektivisch einen Faltenfilter mit einem stirnseitigen Anschlußstück 31, ausgebildet als Filterbeutel 29 für den Einsatz in einen nicht gezeigten Staubsauger. Deutlich erkennbar sind in beiden Fällen die Flächenvergrößerungen durch die Auffaltungen 6 und 8 und die Randversteifung durch die nur an den Enden angebrachten Randbereiche 26.

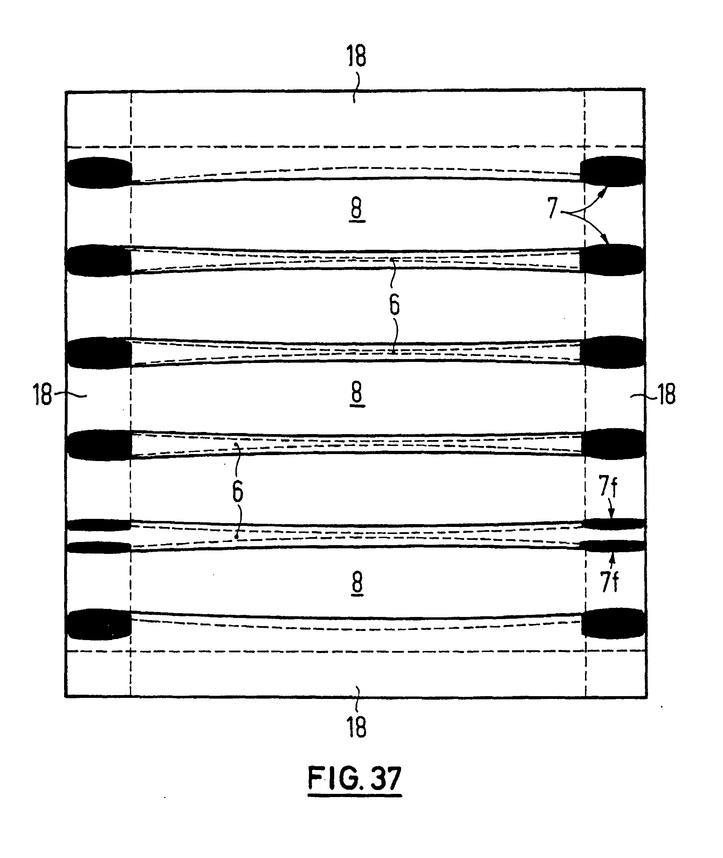

Die Figur 29 zeigt eine perspektivische Ansicht eines im wesentlichen flachliegenden Faltenfilters mit röhrenförmigen Auffaltungen 6 und 8 und einer umlaufenden Randverstärkung im Randbereich 18. Die Auffaltungen 6 und 8 sind durch kurze, quer zu den Auffaltungen 6 und 8 verlaufende Fügepunkte oder Fügelinien 27 fixiert, die im diagonalen oder einem schräg zum Randbereich 18 verlaufenden Raster versetzt zueinander angeordnet sind. In diesem Falle wird auf ausgesprochene Falthilfen verzichtet, um die Flächensymmetrie zu erhalten und zu stabilisieren. Die Fügelinien können aber auch in einem randparallelen Raster angeordnet sein, wodurch eine eventuelle Faltung entlang der Fluchtrichtungen der Fügelinien erleichtert wird. Derartige Faltenfilter können auch im Stapel in sog. Dunstabzugshauben verwendet werden. Auch ist es möglich, die Auffaltungen 6 und 8 sehr viel dichter aneinander zu rücken, und es ist ferner möglich, die Auffaltungen 6 und 8 ohne Unterbrechung durch dazwischen liegende Fügelinien 27 bzw. Fügezonen von einem Randbereich bis zu gegen liegenden Randbereich durchgehend auszubilden, wie dies in Figur 37 gezeigt ist.

Die Figuren 30 und 31 zeigen einen Mehrfach-Faltenfilter 32, ausgebildet als Taschenfilter, dessen Anströmseite durch die Pfeile in Figur 30 symbolisiert ist. Insbesondere aus Figur 31 sind Fügelinien 33 erkennbar, die quer zu den Auffaltungen 6 und 8 verlaufen. Ursprünglich vorhandenes Material 34 des Zuschnitts der Werkstoffbahn wurde umgefaltet, verschweißt und zur Versteifung der obersten Fügelinie 33 verwendet, die zur Aufhängung des Taschenfilters 32 dient. Die einzelnen Taschen werden, von den mittleren Fügelinien 33 ausgehend, nach unten hin dicker, wie dies in Figur 30 angedeutet ist. Ohne eine solche Raumform hätte der Taschenfilter einen Umriß, wie er in Figur 31 strichpunktiert dargestellt ist. Durch das Ausbauchen des Materials zieht der Filter sich jedoch unten trapeörmig zusammen. Dies dient auch zur Vermeidung einer Röhrenlkontaktierung in aufgespanntem, gerahmten Zustand.

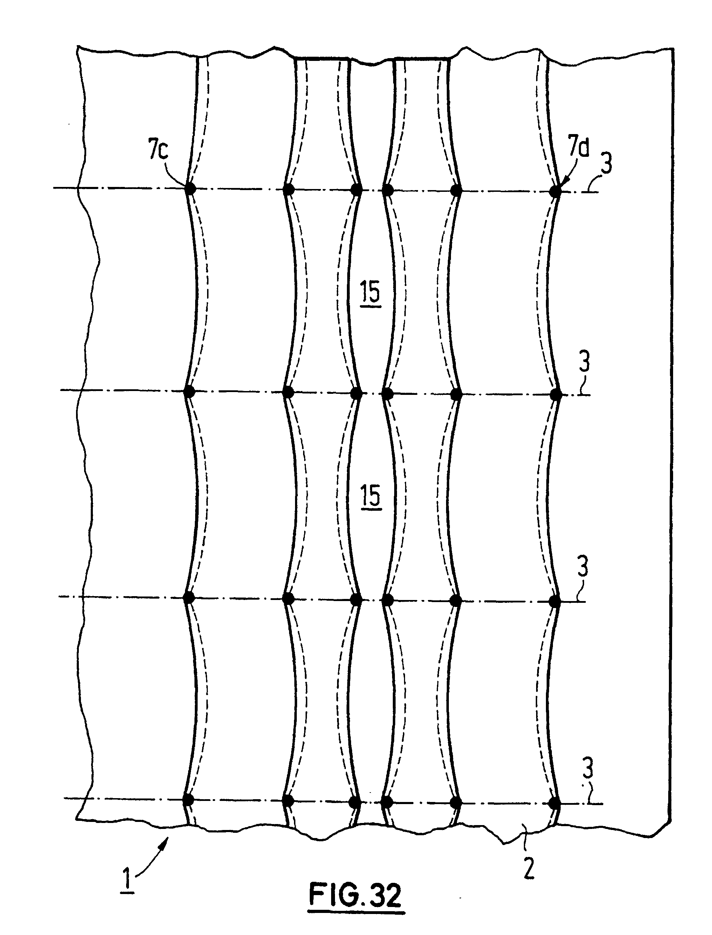

Die Figur 32 zeigt eine weitere Variante des Gegenstandes nach Figur 1, und zwar sind in diesem Fall einseitigv angeordnete punktförmige Fügezonen 7c und 7d vorhanden, wie sie in Figur 5 gezeigt sind. Diese Varante erzeugt keilförmige Ein- und Ausströmflächen in Form von hohlen Dreiecks-Prismenstümpfen und verkleinert die Berührungsflächen im Fall einer Kontaktierung des Filtermaterials.

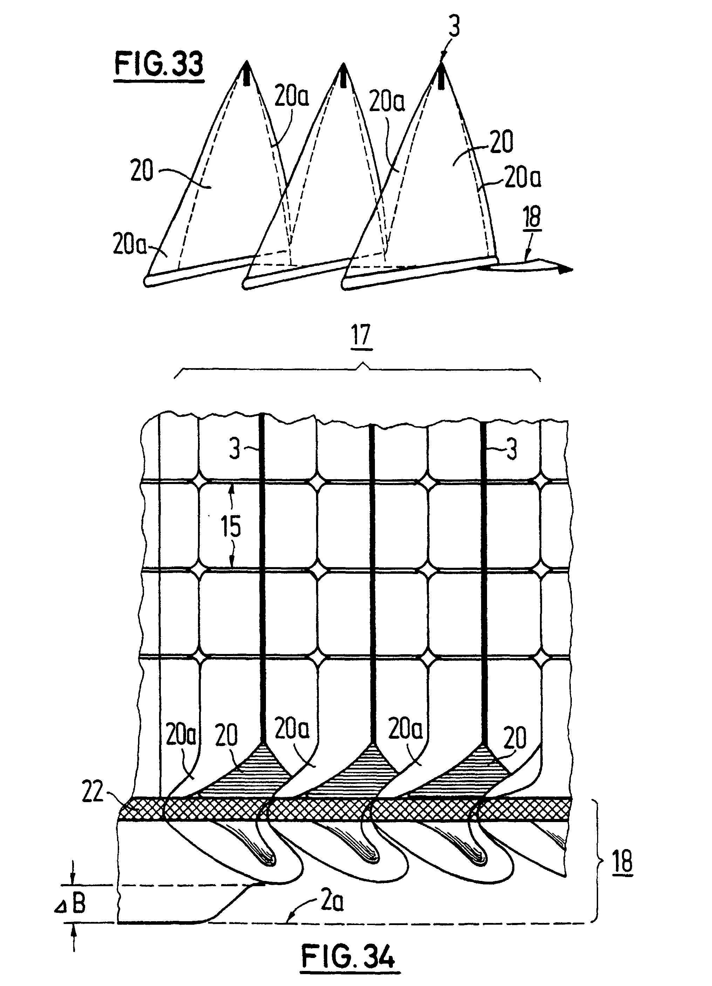

Die Figuren 33 und 34 zeigen eine stirnseitige Ansicht und eine Draufsicht auf die Anströmseite einer Variante des Gegenstandes nach Figur 15. Die schrägstehenden (schraffierten) Verschlußwände 20 an den Enden der Faltungen 17 wurden im Bereich der (kreuzschraffierten) Fügelinie 22 mit einer Querkomponente, also asymmetrisch, zu den Faltlinien 3 in den Randbereich geprägt, und zwar derart, daß sich durch den Falt- und Prägevorgang verdrängtes Material zu Seitenwülsten 20a verformt, die gleichfalls in den Verschlußwänden zusätzliche Filterflächen bilden. Es hat sich überraschend gezeigt, daß durch diese Art des Umlegens der Verschlußwände das Maß "ΔB", um das sich der Rand 2a der Werkstoffbahn 2 beim Umlegen zurückzieht, im Vergleich zu einer senkrechten, geradlinigen Verformung deutlich verringert werden kann, so daß erheblich an teurem Filtermaterial eingespart werden kann.

Durch geeignete Wahl des Winkels "α" (Figur 19) läßt sich eine ausgezeichnete Stapelbarkeit des Faltenfilters nach den Figuren 15 und 33/34 erreichen. Dies reduziert erheblich den Transportaufwand.

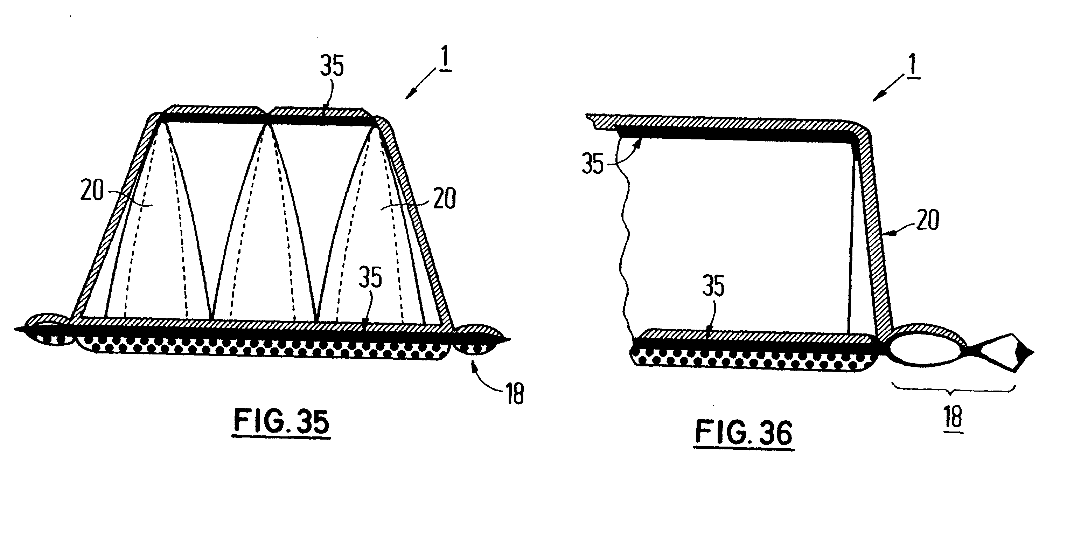

Die Figuren 35 und 36 zeigen Kombinationen eines Faltenfilters nach den Figur 15 und 33/34 mit Filtermaterial 35, das mindestens teilweise aus Aktivkohle (schwarz dargestellt) besteht. Hierdurch und durch ggf. aufgebrachtes zusätzliches Vliesmaterial als Vor- und Nachfilter und/oder durch Netzmaterial, das vor Grobschmutz schützt, werden die Auffaltungen zusätzlich fixiert und die Biegesteifigkeit des fertigen Filters zusätzlich erhöht.

Figur 37 zeigt noch eine Draufsicht auf die zu Figur 29 beschriebene Variante eines flachliegenden Faltenfilters: Die Auffaltungen 6 und 8 sind sehr viel näher aneinander gerückt, und sie verlaufen auch ohne dazwischenliegende Fügezonen von einem der Randbereiche 18 zu dem gegenüberliegenden Randbereich 18, in dem sie durch Energieeintrag in Fügezonen 7 und 7f fixiert sind. Dabei können gemeinsame Fügezonen 7, oder aber auch paarweise Fügezonen 7f gebildet werden. Die gestrichelt angedeuteten überlappungsbereiche brauchen nicht in jedem Falle vorgesehen zu sein, da der umlaufende Randbereich 18 für eine genügende Stabilisierung sorgt.

Derartige Raumformen sind stabilisiert, behalten ihre Strömungswege auch bei einer gegenseitigen Berührung und bei einer Berührung von Gehäusewänden bei. Die Oberflächenvergrößerungen durch Erweiterung, öffnung, Vertiefung der röhrenförmigen Auffaltungen 6 und 8 sind beträchtlich, wobei bis zu 200 % möglich sind, und minimieren Druckdifferenzen zwischen Anström- und Abströmseite. Die Merkmale dieser Raumformen können im gesamten Anwendungsbereich der Filtrationstechnik genutzt werden, z. B. als flachliegende Faltenfilter, Beutel-, Taschen-, Patronenfilter, als Atemschutzmasken etc.

Beim Erfindungsgegenstand mit allen seinen Ausführungsformen wird die Gestaltfestigkeit beträchtlich erhöht. Die Werkstoffbahn 2 ist in den Verdichtungs- und Kreuzungsbereichen irreversibel miteinander verbunden.

Die Verhältnisse sind nicht maßstäblich dargestellt, sondern zur Verdeutlichung des Erfindungsgegenstandes übertrieben gezeichnet. Die unterschiedlichen Steg- bzw. Leistenformen sind gegeneinander austauschbar.

### Bezugszeichenliste:

- 1: Faltenfilter
- 1a: Faltenflter
- 2: Werkstoffbahn
- 2a: Rand
- 3: Faltlinien
- 3a: Faltlinien
- 3b: Faltlinien
- 4: Faltkanten
- 4a: Faltkanten
- 4b: Faltkanten
- 4c: Faltkanten
- 5: Filterflächen
- 6: Auffaltungen
- 7: Fügezonen
- 7a: Fügezonen
- 7b: Fügezonen
- 7c: Fügezonen
- 7d: Fügezonen
- 7e: Fügezonen
- 7f: Fügezonen
- 8: Auffaltungen
- 9: Verdichtungsbereiche
- 10: Verdichtungsbereiche
- 11: Stege
- 11a: Filmscharniere
- 12: Pfeile
- 13: Stege
- 13a: Filmscharniere
- 15: Röhren
- 16: Hauptfläche
- 17: Faltungen
- 18: Randbereich
- 19: Verschlußwände
- 20: Verschlußwände
- 20a: Seitenwülste
- 21: Stützlineale
- 22: Fügelinien
- 23: Zusatzwerkstoff
- 24: Rahmen
- 24a: Rahmenteil
- 24b: Rahmenteil
- 25: Verbindungsschiene
- 26: Randbereich
- 27: Fügelinien 27
- 28: Filterbeutel
- 29: Filterbeutel
- 30: Anschlußstück
- 31: Anschlußstück
- 32: Mehrfach-Faltenfilter
- 33: Fügelinien
- 34: Material
- 35: Filtermaterial mit Aktivkohle

- "α": Winkel
- B1, B2, B3, B4: Bereiche
- D: überlappungsbereiche.
- D1, D2: Maße
- ΔB: Maß
- E: Ebene
- L1, L2, L3: Linien
- P, P1, P2: Pfeile

## Patentansprüche

1. Faltenfilter mit Filterflächen (5) aus mindestens einer Werkstoffbahn (2) aus Fasermaterial mit thermoplastischen Komponenten aus der Gruppe thermoplastische Fasern und thermoplastische Bindemittel, und mit Auffaltungen, die in Abständen durch einen Energieeintrag plastifiziert und fixiert sind, und mit mindestens einem Randbereich (18, 26), **dadurch gekennzeichnet, daß** die Auffaltungen (6, 8) wellenförmig ausgebildet sind und sich in ihren Längsrichtungen in Bereichen ("D") überlappen und in den überlappungsbereichen zumindest stellenweise in Fügezonen (7) fixiert sind.

2. Faltenfilter nach dem Oberbegriff des Anspruchs 1, **dadurch gekennzeichnet, daß**
a) zwischen durch den Energieeintrag erzeugten Verdichtungsbereichen (9, 10), Filterflächen (5) angeordnet sind, die unter einem Winkel zueinander stehen, und daß
b) die Verdichtungsbereiche (9, 10) als Stege (11, 13) ausgebildet sind und sich mit den Maßen (B1, B2, B3, B4) über einen Abstand von 1 bis 30 mm von den Faltkanten (4, 4a, 4b, 4c) ausgehend erstrecken und jenseits der oder zwischen den Filterflächen (5) liegen.

3. Faltenfilter nach dem Oberbegriff des Anspruchs 1, **dadurch gekennzeichnet, daß** der Randbereich (18, 26) durch Energieeintrag mittels Ultraschall plastifiziert, verfestigt und stabilisiert ist.

4. Faltenfilter nach einem der Ansprüche 1 oder 3, **dadurch gekennzeichnet, daß** der Faltenfilter eine im wesentlichen ebene Hauptfläche (16) aufweist, aus der die Auffaltungen (6, 8) auf mindestens einer Seite vorstehen.

5. Faltenfilter nach dem Oberbegriff des Anspruchs 1, **gekennzeichnet durch** Falthilfen aus der Gruppe Faltlinien (3, 3a) und Faltkanten (4, 4a, 4b, 4c), die zwischen sich Filterflächen (5) einschließen, wobei das Fasermaterial im Bereich der Faltlinien (3, 3a) auf mindestens einer Seite der Filterflächen (5) gegenüber dem Ursprungszustand des Fasermaterials **durch** Energieeintrag zu streifen- oder punktförmigen Fügezonen (7) gegenüber der ursprünglichen Dicke des Fasermaterials verdichtet und verfestigt ist, und daß die wellenförmigen Auffaitungen (6, 8) quer zu den Faltlinien (3, 3a) verlaufen,

6. Faltenfilter nach Anspruch 2, **dadurch gekennzeichnet, daß** die Stege (13) durch Mehrfachfaltungen mit mindestens drei Faltkanten (4a, 4b, 4c) gebildet sind, derart, daß jeweils mehr als zwei Lagen der Werkstoffbahn (2) aufeinanderliegen und in diesem Bereich (B1, B2, B3) verdichtet und miteinander verbunden sind.

7. Faltenfilter nach Anspruch 2, **dadurch gekennzeichnet, daß** die durch Plastifizierung erzeugten Stege (11, 13) auf der Anströmseite angeordnet sind.

8. Faltenfilter nach Anspruch 2, **dadurch gekennzeichnet, daß** die durch Plastifizierung erzeugten Stege (11, 13) auf der Abströmseite angeordnet sind.

9. Faltenfilter nach Anspruch 2, **dadurch gekennzeichnet, daß** die Filterflächen (5) zwischen den Stegen (11, 13) und quer zu den Faltlinien (3, 3a) durch Auffattungen (6, 8) mit einer Wellen- oder Röhrenform versehen und entlang den Faltlinien (3, 3a) unter Fixierung der Wellenform durch streifen- oder punktförmige Fügezonen (7) gegenüber der ursprünglichen Dicke verdichtet sind.

10. Faltenfilter nach einem der Ansprüche 1 und 9, **dadurch gekennzeichnet, daß** die Fügezonen (7) der Auffaltungen (6, 8) jeweils an den Eckpunkten imaginärer Rechtecke auf zueinander parallelen Linien liegen.

11. Faltenfilter nach einem der Ansprüche 1 und 9, **dadurch gekennzeichnet, daß** die Fügezonen (7) der Auffaltungen (6, 8) jeweils an den Eckpunkten imaginärer Parallelogramme auf zueinander parallelen Linien liegen.

12. Faltenfilter nach einem der Ansprüche 1 und 9, **dadurch gekennzeichnet, daß** die Fügezonen (7) jeweils benachbarter Auffaltungen (6, 8) paarweise in Richtung der Auffaltungen (6, 8) versetzt zueinander angeordnet sind.

13. Faltenfilter nach einem der Ansprüche 1 und 9 und nach Anspruch 3, **dadurch gekennzeichnet, daß** die Auffaltungen (6, 8) Wellen oder Röhren (15) bilden, die in Abständen flachgedrückt und durch einen Fügevorgang im Randbereich (18) fixiert sind.

14. Faltenfilter nach Anspruch 13, **dadurch gekennzeichnet, daß** die Werkstoffbahn (2) quer zu den Wellen oder Röhren in Zick-Zack--Form aufgefaltet ist und daß die Enden dieser Zick-Zack-Faltungen (17) in den ebenen Randbereich (18) des Faltenfilters verformt und dort verdichtet und verfestigt sind.

15. Faltenfilter nach Anspruch 3 oder 14, **dadurch gekennzeichnet, daß** die Filterflächen (5) durch Zick-Zack-Faltungen (17) die Form spitzwinkliger Dächer haben und daß die Enden dieser Faltungen (17) durch Verformung, Plastifizierung und Verdichtung im Randbereich (18, 26) Verschlußwände (20) bilden.

16. Faltenfilter nach Anspruch 15, **dadurch gekennzeichnet, daß** sich die Zick-Zack-Faltungen (17) beiderseits des verfestigten Randbereiches (18) erstrecken.

17. Faltenfilter nach Anspruch 3 **dadurch gekennzeichnet, daß** der Randbereich (18,26) durch zusätzliche linienförmige Fügezonen (22) verstärkt ausgebildet ist.

18. Faltenfilter nach Anspruch 3, **dadurch gekennzeichnet, daß** der Randbereich (18) durch eine fixierte Profilierung verstärkt ausgebildet ist.

19. Faltenfilter nach Anspruch 3, **dadurch gekennzeichnet, daß** der Randbereich (18) in einen Rahmen (24) eingespannt ist.

20. Faltenfilter nach einem der Ansprüche 16 und 17, **dadurch gekennzeichnet, daß** die Randbereiche (18) benachbarter Faltenfilter (1, 1a) formschlüssig in eine Verbindungsschiene (25) eingeschoben sind.

21. Faltenfilter nach Anspruch 15, **dadurch gekennzeichnet, daß** die Verschtußwände (20) an den Enden der Faltungen (17) mit einer Querkomponente zu den Faltlinien (3) in den Randbereich (18) geprägt sind, derart, daß durch den Prägevorgang verdrängtes Material zu Seitenwülsten (20a) verformt ist.

22. Faltenfilter nach einem der Ansprüche 1 bis 3, **dadurch gekennzeichnet, daß** auf mindestens einer Seite des Faltenfilters (1) ein zusätzliches Filtermaterial (35) als Vor- und/oder Nachfilter angeordnet ist.

23. Faltenfilter nach Anspruch 22, **dadurch gekennzeichnet, daß** das zusätzliche Filtermaterial mindestens teilweise aus Aktivkohle besteht.

24. Faltenfilter nach Anspruch 22, **dadurch gekennzeichnet, daß** das zusätzliche Filtermaterial ein Grobfilter aus einer netzartigen Struktur ist.

25. Faltenfilter nach einem der Ansprüche 1 bis 3, **dadurch gekennzeichnet, daß** die Werkstoffbahn (2) zu einem Beutel (28, 29) zusammengelegt ist, der an seinem einen Ende durch die Verfestigung des dort befindlichen Randbereichs (26) verschlossen ist, und daß der Beutel (28, 20) ein Anschlußstück (30, 31) für einen Saugstutzen eines Staubsaugers besitzt.

26. Faltenfilter nach einem der Ansprüche 1 bis 3, **dadurch gekennzeichnet, daß** die Werkstoffbahn (2) zu einem trapezförmig geformten Tascherifilter (32) verfestigt ist und ein- oder beidseitig asymmetrische röhrenförmige Auffaltungen (6, 8) besitzt.

## Claims

1. Folded filter with filtering surfaces (5) of at least one length of material (2) of fibre material with thermo-plastic components of the group of thermoplastic fibres and thermoplastic bonding means, and with open folds which are plasticised and fixed at spatial intervals by energy application, and with at least one edge area (18, 26), **characterised in that** the open folds (6, 8) are wavy and overlap in their longitudinal directions in areas ("D") and are in the overlapping areas at least in some places fixed in joining zones (7).

2. Folded filter according to the concept of Claim 1,
**characterised in that**
a) filter surfaces (5) which stand at an angle relative to each other are arranged between compression areas (9, 10) produced by energy application; and
b) the compression areas (9, 10) are designed as webs (11, 13) and extend with dimensions (B1, B2, B3, B4) over a distance between 1 and 30 mm from the fold edges (4, 4a, 4b, 4c) and lie the other side of the filter surfaces (5) or thereinbetween.

3. Folded filter according to the concept of Claim 1, **characterised in that** the edge area (18, 26) is plasticised, strengthened and stabilised by energy application by means of ultrasound.

4. Folded filter according to one of Claims 1 or 3, **characterised in that** the folded filter comprises an essentially even main surface (16) from where open folds (6, 8) protrude on at least one side.

5. Folded filter according to the concept of Claim 1, **characterised by** fold aids of the group fold lines (3, 3a) and fold edges (4, 4a, 4b, 4c) which include filtering surfaces (5), and the fibre material is in the area of the fold lines (3, 3a) on at least one side of the filtering surfaces (5) and relative to the original state of the fibre material compressed and strengthened by energy application into stripy or pointed joining zones (7) relative to the original thickness of the fibre material, and the wavy open folds (6, 8) extend transversely to the fold lines (3, 3a).

6. Folded filter according to Claim 2, **characterised in that** the webs (13) are created by multiple folding with at least three fold edges (4a, 4b, 4c) in such a manner that respectively more than two layers of the length of material (2) lie on top of each other, and they are in this area (B1, B2, B3) compressed and joined together.

7. Folded filter according to Claim 2, **characterised in that** webs (11, 13) produced by plasticising are arranged on the upstream side.

8. Folded filter according to Claim 2, **characterised in that** webs (11, 13) produced by plasticising are arranged on the downstream side.

9. Folded filter according to Claim 2, **characterised in that** the filter surfaces (5) are between the webs (11, 13) and transversely to the fold lines (3, 3a) provided by open folds (6, 8) with a wave or tubular form and along the fold lines (3, 3a) compressed relative to the original thickness by fixing the wave form by striped or pointed joining zones (7).

10. Folding filter according to one of Claims 1 and 9, **characterised in that** the joining zones (7) of the open folds (6, 8) lie respectively at the end points of imaginary rectangles on parallel lines.

11. Folded filter according to one of Claims 1 and 9, **characterised in that** the joining zones (7) of the open folds (6, 8) respectively lie at the end points of imaginary parallelograms on parallel lines.

12. Folded filter according to one of Claims 1 and 9, **characterised in that** the joining zones (7) of respective adjacent open folds (6, 8) are arranged transposed in pairs in the direction of the open folds (6, 8).

13. Folded filter according to one of Claims 1 and 9 and Claim 3, **characterised in that** the open folds (6, 8) form waves or tubes (15) which are flattened at spatial intervals and fixed by a joining process in the edge area (18).

14. Folded filter according to Claim 13, **characterised in that** the length of material (2) is folded open transversely to the waves or tubes in zigzag shape (17), and the ends of these zigzag folds (17) are in the even edge area (18) of the folded filter reshaped and compressed and strengthened thereat.

15. Folded filter according to Claim 3 or 14, **characterised in that** the filter surfaces (5) have due to zigzag folds (17) the shape of acute tops, and the ends of these folds (17) form sealing walls (20) by way of reshaping, plasticising and compression in the edge area (18, 26).

16. Folded filter according to Claim 15, **characterised in that** the zigzag folds (17) extend on both sides of the strengthened edge area (18).

17. Folded filter according to Claim 3, **characterised in that** the edge area (18, 26) is of reinforced design by means of linear joining zones (22).

18. Folded filter according to Claim 3, **characterised in that** the edge area (18) is strengthened by fixed profiling.

19. Folded filter according to Claim 3, **characterised in that** the edge area (18) is clamped into a frame (24).

20. Folded filter according to one of Claims 16 and 17, **characterised in that** the edge areas (18) of adjacent folded filters (1, 1a) are positively pushed into a connecting track (25).

21. Folded filter according to Claim 15, **characterised in that** the sealing walls (20) are at the ends of the folds (17) embossed with a transverse component to the fold lines (3) in the edge area (18) so that material displaced by the embossing process is reshaped into lateral beads (20a).

22. Folded filter according to one of Claims 1 to 3, **characterised in that** on at least one side of the folded filter (1) is arranged an additional filter material (35) as a pre-filter and/or post-filter.

23. Folded filter according to Claim 22, **characterised in that** the additional filter material is at least partially composed of active coal.

24. Folded filter according to Claim 22, **characterised in that** the additional filter material is a coarse filter of a gridlike structure.

25. Folded filter according to one of Claims 1 to 3, **characterised in that** the length of material (2) is laid together to form a bag (28, 29) which is at one end sealed by strengthening of the edge area (26) thereat, and the bag (28, 20) comprises a connecting piece (30, 31) for the suction socket of a vacuum cleaner.

26. Folded filter according to one of Claims 1 to 3, **characterised in that** the length of material (2) is strengthened into a trapezoidal pocket filter (32) and comprises singlesided or twosided asymmetrical tubular open folds (6, 8).

## Revendications

1. Filtre à plis présentant des surfaces de filtrage (5) d'au moins une bande (2) en matériau de fibres à composantes thermoplastiques parmi le groupe dès fibres thermoplastiques et des liants thermoplastiques, et présentant des plissures plastifiées et fixées à distance par application d'énergie, et présentant au moins une zone marginale (18, 26), **caractérisé en ce que** les plissures (6, 8) sont réalisées ondulées et se chevauchent dans des zones ("D") dans leurs directions longitudinales et sont fixées, dans les zones de chevauchement, au moins localement dans des zones d'assemblage (7).

2. Filtre à plis selon le préambule de la revendication 1, **caractérisé en ce que** :
a) il est prévu entre les zones de compression (9, 10) générées par application d'énergie, des zones de filtrage (5) qui sont agencées sous un angle les unes par rapport aux autres, et
b) les zones de compression (9, 10) sont réalisées sous forme de barrettes (11, 13) et s'étendent à des valeurs (B1, B2, B3, B4) sur une distance de 1 à 30 mm à partir des arêtes de pliage (4, 4a, 4b, 4c) et se trouvent au-delà des ou entre les surfaces de filtrage (5).

3. Filtre à plis selon le préambule de la revendication 1, **caractérisé en ce que** la zone marginale (18, 26) est plastifiée, solidifiée et stabilisée par application d'énergie au moyen d'ultrasons.

4. Filtre à plis selon l'une ou l'autre des revendications 1 et 3, **caractérisé en ce que** le filtre à plis présente une surface principale sensiblement plane (16) hors de laquelle font saillie les plissures (6, 8) sur au moins un côté.

5. Filtre à plis selon le préambule de la revendication 1, **caractérisé par** des aides au pliage parmi le groupe des lignes de pliage (3, 3a) ou des arêtes de pliage (4, 4a, 4b, 4c) qui enferment entre elles des surfaces de filtrage (5), le matériau de fibres étant comprimé et solidifié, par rapport à l'épaisseur initiale du matériau de fibres, par application d'énergie en zones d'assemblage (7) en forme de rubans ou de points, dans la zone des lignes de pliage (3, 3a) sur au moins un côté des surfaces de filtrage (5) par rapport à l'état initial du matériau de fibres, et en ce que les plissures (6, 8) ondulées s'étendent transversalement aux lignes de pliage (3, 3a).

6. Filtre à plis selon la revendication 2, **caractérisé en ce que** les barrettes (13) sont formées par des plissures multiplies avec au moins trois arêtes de pliage (4a, 4b, 4c), de telle sorte que plus de deux couches respectives de la bande de matériau (2) sont superposées et comprimées et reliées les unes aux autres dans cette zone (B1, B2, B3).

7. Filtre à plis selon la revendication 2, **caractérisé en ce que** les barrettes (11, 13) générées par plastification sont agencées du côté afflux.

8. Filtre à plis selon la revendication 2, **caractérisé en ce que** les barrettes (11, 13) générées par plastification sont agencées sur le côté évacuation.

9. Filtre à plis selon la revendication 2, **caractérisé en ce que** les surfaces de filtrage (5) sont pourvues de plissures (6, 8) en forme ondulée ou tubulaire entre les barrettes (11, 13) et transversalement aux lignes de pliage (3, 3a), et **en ce qu'**elles sont comprimées par rapport à l'épaisseur initiale le long des lignes de pliage (3, 3a) avec fixation de la forme ondulée par des zones d'assemblage en forme de rubans ou de points.

10. Filtre à plis selon l'une des revendications 1 et 9, **caractérisé en ce que** les zones d'assemblage (7) des plissures (6, 8) se trouvent chacune aux coins de rectangles imaginaires sur des lignes mutuellement parallèles.

11. Filtre à plis selon l'une des revendications 1 et 9, **caractérisé en ce que** les zones d'assemblage (7) des plissures (6, 8) se trouvent chacune aux des coins de parallélogrammes imaginaires sur des lignes mutuellement parallèles.

12. Filtre à plis selon l'une des revendications 1 et 9, **caractérisé en ce que** les zones d'assemblage (7) de plissures voisines respectives (6, 8) sont agencées en décalage mutuel par paire en direction des plissures (6, 8).

13. Filtre à plis selon l'une des revendications 1 et 9 et selon la revendication 3, **caractérisé en ce que** les plissures (6, 8) forment des ondulations ou des tubes (15) qui sont écrasés à des distances et fixés par une opération d'assemblage dans la zone marginale (18).

14. Filtre à plis selon la revendication 13, **caractérisé en ce que** la bande de matériau (2) est pliée transversalement aux ondulations ou aux tubes en forme de zigzag, et **en ce que** les extrémités de ces plissures en zigzag (17) sont déformées dans la zone marginale plane (18) du filtre à plis et y sont comprimées et solidifiées.

15. Filtre à plis selon l'une ou l'autre des revendications 3 et 14, **caractérisé en ce que** les surfaces de filtrage (5) ont la forme de toitures à angle aigu en raison des plissures en zigzag (17), et **en ce que** les extrémités de ces plissures (17) forment des parois de fermeture (20) par déformation, plastification et compression dans la zone marginale (18,26).

16. Filtre à plis selon la revendication 15, **caractérisé en ce que** les plissures en zigzag (17) s'étendent des deux côtés de la zone marginale solidifiée (18).

17. Filtre à plis selon la revendication 3, **caractérisé en ce que** la zone marginale (18, 26) est réalisée renforcée par des zones d'assemblage linéaires supplémentaires (22).

18. Filtre à plis selon la revendication 3, **caractérisé en ce que** la zone marginale (18) est réalisée renforcée par un profilage fixé.

19. Filtre à plis selon la revendication 3, **caractérisé en ce que** la zone marginale (18) est tendue dans un cadre (24).

20. Filtre à plis selon l'une des revendications 16 et 17, **caractérisé en ce que** les zones marginales (18) de filtres à plis voisins (1, 1a) sont enfilées en coopération de formes dans un rail de jonction (25).

21. Filtre à plis selon la revendication 15, **caractérisé en ce qu'**aux extrémités des plissures (17) les parois de fermeture (20) sont gaufrées avec une composante transversale par rapport aux lignes de pliage (3) dans la zone marginale (18), de telle sorte que le matériau refoulé par l'opération de gaufrage est déformé en bourrelets latéraux (20a).

22. Filtre à plis selon l'une des revendications 1 à 3, **caractérisé en ce qu'**il est prévu, sur au moins un côté du filtre à plis (1), un matériau de filtre supplémentaire (35) à titre de filtre préliminaire et/ou postérieur.

23. Filtre à plis selon la revendication 22, **caractérisé en ce que** le matériau de filtre supplémentaire est constitué au moins partiellement en charbon actif.

24. Filtre à plis selon la revendication 22, **caractérisé en ce que** le matériau de filtre supplémentaire est un filtre grossier à structure en forme de réseau.

25. Filtre à plis selon l'une des revendications 1 à 3, **caractérisé en ce que** la bande de matériau (2) est repliée en formant un sac (28, 29) qui est refermé à l'une de ses extrémités par la solidification de la zone marginale (26) qui s'y trouve, et **en ce que** le sac (28, 29) possède une pièce de raccordement (30, 31) pour un manchon d'aspiration d'un aspirateur.

26. Filtre à plis selon l'une des revendications 1 à 3, **caractérisé en ce que** la bande de matériau (2) est solidifiée en un filtre à poche (32) mis en forme de trapèze et possède des plissures (6, 8) tubulaires asymétriques sur un ou sur les deux côtés.
